# EUROPÄISCHE PATENTSCHRIFT

(11) **EP 3 536 938 B1**
(45) Veröffentlichungstag und Bekanntmachung des Hinweises auf die Patenterteilung: **29.09.2021**
(21) Anmeldenummer: 18200353.3
(22) Anmeldetag: 15.10.2018
(51) Int. Cl.: F02D 41/14, F02D 13/02, F02D 41/02, F02D 41/06

(54) **VERFAHREN ZUM BETREIBEN EINER BRENNKRAFTMASCHINE ZUR ERHÖHUNG EINER ABGASTEMPERATUR**
METHOD FOR OPERATING A COMBUSTION ENGINE FOR INCREASING EXHAUST GAS TEMPERATURE
PROCÉDÉ DE FONCTIONNEMENT D'UN MOTEUR À COMBUSTION INTERNE PERMETTANT D'AUGMENTER UNE TEMPÉRATURE DE GAZ D'ÉCHAPPEMENT

(30) Priorität: 08.03.2018 DE 102018105357
(43) Veröffentlichungstag der Anmeldung: 11.09.2019
(73) Patentinhaber: MAN Truck & Bus SE, 80995 München (DE)
(72) Erfinder: Malischewski, Thomas, 91560 Heilsbronn (DE); Renner, Dominik, 91522 Ansbach (DE)
(74) Vertreter: v. Bezold & Partner Patentanwälte - PartG mbB

(56) Entgegenhaltungen:
- DE-A1-102004 016 386
- DE-A1-102005 006 702
- US-A1- 2008 210 197
- US-A1- 2010 192 882
- US-A1- 2016 160 765

## Beschreibung

Die Erfindung betrifft ein Verfahren zum Betreiben einer Brennkraftmaschine zur Erhöhung einer Abgastemperatur.

Aus der DE 103 48 107 A1 ist ein Verfahren zum Aufheizen eines Katalysators eines Verbrennungsmotors bekannt. Um den Abgaskatalysator eines Kraftfahrzeugs mit Verbrennungsmotor schnell auf die erforderliche Betriebstemperatur zu bringen, umfasst das Verfahren die Schritte: Zuführen von einem ersten Luft-/Kraftstoffgemisch in eine erste Gruppe von Zylindern, so dass ein positives Motormoment aufgebaut wird und Zuführen von einem zweiten Luft-/Kraftstoffgemisch bzw. reiner Luft in eine zweite Gruppe von Zylindern. Ein Einlassventil und ein Auslassventil werden derart gesteuert, dass ein Motorbremsmoment aufgebaut wird. Das erste Luft-/Kraftstoffgemisch in der ersten Gruppe von Zylindern ist fetter als im Normalbetrieb. Das zweite Luft-/Kraftstoffgemisch bzw. die reine Luft in der zweiten Gruppe von Zylindern wird nicht gezündet.

Es ist ferner bekannt, bei aktuellen Motoren zur Abgastemperaturerhöhung zur Regeneration eines Dieselpartikelfilters eine sogenannte Standregeneration durchzuführen. Hierbei wird die Leerlaufdrehzahl angehoben und die Gegendruckklappe geschlossen. Während dieser Zeit ist das Fahrzeug nicht betriebsbereit.

Aus der EP 3 115 581 A1 ist ein innermotorischer Heizbetrieb durch Lasterhöhung bekannt. Das Betriebsverfahren zeichnet sich dadurch aus, dass bedarfsfallabhängig eine KraftstoffEinspritzung in zumindest einen der Zylinder abgeschaltet wird und der zumindest eine abgeschaltete Zylinder in einen Bremsbetrieb versetzt wird, so dass insbesondere die Temperatur des Abgases für das Abgasnachbehandlungssystem erhöht werden kann.

Nachteilig an den bekannten Verfahren aus der DE 103 48 107 A1 und der EP 3 115 581 A1 kann sein, dass diese zu ungewünschten Anregungen im Kurbeltrieb führen können und unter Schwachlastbedingungen nur bedingt einsetzbar sind.

Die DE 10 2004 016386 A1 betrifft ein Verfahren zum Betreiben einer Brennkraftmaschine eines Kraftfahrzeugs mit einem der Brennkraftmaschine nachgeschalteten Abgaskatalysator, der bei einem Kaltstart der Brennkraftmaschine auf Katalysator-Betriebstemperatur aufgeheizt wird. Die Öffnung der Zylinder-Auslassventile wird während der Kaltstartphase gegenüber einer Auslassventil-Basiseinstellung, bezogen auf den oberen Totpunkt (OT) bzw. bezogen auf den Grad Kurbelwinkel, in Richtung spät verschoben und der Ventilhub der Zylinder-Auslassventile während der Kaltstartphase gegenüber einer Auslassventilhub-Basiseinstellung verkleinert.

Zum weiteren Stand der Technik wird auf die US 2008/210197 A1, DE 10 2005 006702 A1, die US 2010/192882 A1 und die US 2016/160765 A1 verwiesen.

Der Erfindung liegt die Aufgabe zu Grunde, ein alternatives und/oder verbessertes Verfahren zum Erhöhen einer Abgastemperatur zu schaffen. Insbesondere soll das Verfahren zur Erhöhung eine Abgastemperatur auch unter Schwachlastbedingungen geeignet sein.

Die Erfindung geht hierbei insbesondere von der EP 3 115 581 A1 aus. Davon ausgehend liegt der Erfindung insbesondere die Aufgabe zu Grunde, ein innermotorisches Heizverfahren zu schaffen, dass zu keinen ungewünschten Anregungen im Ventiltrieb führt.

Die Aufgabe wird gelöst durch die Merkmale gemäß dem unabhängigen Anspruch. Vorteilhafte Weiterbildungen sind in den abhängigen Ansprüchen und der Beschreibung angegeben.

Das Verfahren ist zum Betreiben einer Brennkraftmaschine (z. B. 4-Takt-Brennkraftmaschine) zum Erhöhen einer Abgastemperatur geeignet. Das Verfahren weist ein Verkürzen einer Öffnungszeitdauer (z. B. angegeben in Grad Kurbelwinkel (KW)) eines Auslassventils eines Zylinders der Brennkraftmaschine im Auslasstakt verglichen mit einer Normalöffnungszeitdauer des Auslassventils (z. B. für Normalbetrieb der Brennkraftmaschine, bei dem das Auslassventil im Wesentlichen während des gesamten Auslasstaktes geöffnet ist) auf. Das Verfahren weist ein Verzögern eines Öffnungszeitpunkts des Auslassventils im Auslasstakt verglichen mit einem Normalöffnungszeitpunkt des Auslassventils (z. B. für Normalbetrieb der Brennkraftmaschine, bei dem das Auslassventil im Wesentlichen zu Beginn des Auslasstaktes geöffnet wird) auf. Das Verfahren weist ferner ein Betreiben der Brennkraftmaschine durch Befeuern (z. B. Zünden eines Luft-/Kraftstoffgemischs in einer Verbrennungskammer und/oder Verbrennen eines Luft-/Kraftstoffgemischs in einer Verbrennungskammer) des Zylinders und Betätigen des Auslassventils gemäß der verkürzten Öffnungszeitdauer und dem verzögerten Öffnungszeitpunkt auf.

Damit wird ein Verfahren geschaffen, das auch unter Schwachlastbedingungen der Brennkraftmaschine eine Erhöhung der Abgastemperatur, zum Beispiel zur Regeneration eines Abgaskatalysators, ermöglicht. Die Temperaturerhöhung ergibt sich daraus, dass die Arbeit der Ladungswechselschleife deutlich erhöht wird. Diese Erhöhung folgt aus der anfänglichen Komprimierung des Abgases im Zylinder und der anschließenden Dekomprimierung nahe des oberen Totpunktes. Hieraus ergibt sich eine links drehende Schleife (Linksprozess) im p-V Diagramm (Druck p -Volumen V- Diagramm), die negative Arbeit und eine Temperatursteigerung des Abgases erzeugt. Gleichzeitig muss in der Hochdruckschleife die zusätzliche Ladungswechselarbeit kompensiert werden, was zu einer Erhöhung der (Kraftstoff-) Einspritzmenge führt, was ebenfalls zu einem Anstieg der Abgastemperatur führt. Das Verfahren erfordert insbesondere nicht, einen Zylinder der Brennkraftmaschine abzuschalten. Es wurde herausgefunden, dass es dadurch zu keinen ungewünschten Anregungen durch abgeschaltete Zylinder im Kurbeltrieb der Brennkraftmaschine kommt.

In einer bevorzugten Ausführungsform weist das Verfahren ferner ein Verkleinern eines Ventilhubs des Auslassventils im Auslasstakt verglichen mit einem Normalventilhub des Auslassventils (z. B. für Normalbetrieb der Brennkraftmaschine, bei dem das Auslassventil im Wesentlichen vollständig geöffnet wird) auf. Das Betreiben der Brennkraftmaschine durch Befeuern des Zylinders und Betätigen des Auslassventils kann dann auch gemäß dem verkleinerten Ventilhub durchgeführt werden. Die Verringerung des Ventilhubs kann zu einer Vergrößerung der Dekomprimierungsarbeit beitragen, da der Strömungsquerschnitt über das nur teilweise geöffnete Auslassventil verringert ist.

Erfindungsgemäß ist die Öffnungszeitdauer des Auslassventils so (insbesondere voreingestellt und/oder vorbestimmt) verkürzt, der Öffnungszeitpunkt des Auslassventils so (insbesondere voreingestellt und/oder vorbestimmt) verzögert und/oder ein Ventilhub des Auslassventils so (insbesondere voreingestellt und/oder vorbestimmt) verkleinert, dass Abgas im Zylinder im Auslasstakt, insbesondere anfänglich, verdichtet wird. Alternativ oder zusätzlich wird verdichtetes Abgas bei Öffnung des Auslassventils dekomprimiert. Hierbei kann beispielsweise die Gegendruckklappe im Abgastrakt zumindest zeitweise geschlossen sein. Es ist möglich, dass sich ein Linksprozess im p-V-Diagramm ergibt, der negative Arbeit, insbesondere Dekomprimierungsarbeit, und eine Temperatursteigerung des Abgases erzeugt und/oder eine Hochdruckschleife im p-V-Diagramm erzeugt wird, die eine Erhöhung einer Arbeit in einer Ladungswechselschleife kompensiert, die eine Erhöhung einer Kraftstoffeinspritzmenge erfordert.

Erfindungsgemäß ist die Offnungszeitdauer des Auslassventils so verkürzt, der Öffnungszeitpunkt des Auslassventils so (insbesondere voreingestellt und/oder vorbestimmt) verzögert und/oder ein Ventilhub des Auslassventils so (insbesondere voreingestellt und/oder vorbestimmt) verkleinert, dass die Verdichtung und/oder die Dekomprimierungsarbeit maximiert wird unter der Randbedingung, dass ein Zylinderdruck zum Öffnungszeitpunkt eines Einlassventils des Zylinders unterhalb eines Grenzzylinderdrucks ist. Das Verfahren ist folglich in Abhängigkeit von einem nicht zu überschreitenden Grenzzylinderdruck, insbesondere einmalig, eingestellt bzw. abgestimmt, um dann bspw. eine entsprechende strukturelle Konfiguration eines variablen Ventiltriebs aufzubauen. Insbesondere ist der Grenzzylinderdruck so gewählt, dass eine Belastung der Einlassventile und der Ventiltriebe der Einlassventile beim Öffnen der Einlassventile gegen den Zylinderdruck nicht zu groß ist. Ferner soll verhindert werden, dass (zu viel) Abgas in den Einlasstrakt durch die geöffneten Einlassventile strömt. Erfindungsgemäß liegt der Grenzzylinderdruck in einem Bereich zwischen 15 bar und 25 bar.

Es wurde herausgefunden, dass sich die Auswahl bestimmter, nachfolgend aufgeführter Werte besonders eignet, um ein Maximum an Abgasenthalpie insbesondere unter Schwachlastbedingungen zu erzeugen. Insbesondere kann hierdurch eine maximale Dekompressionswirkung erzielt werden.

In einem Ausführungsbeispiel ist der Öffnungszeitpunkt so verzögert, dass das Auslassventil im Auslasstakt nach einer ersten Hälfte des Auslasstakts, im Bereich zwischen 120° KW (Kurbelwinkel) vor OT (oberer Totpunkt einer Kolbenbewegung des Kolbens des Zylinders) und 40° KW vor OT, im Bereich zwischen 100° KW vor OT und 60° vor OT, im Bereich zwischen 90° KW vor OT und 70° vor OT, und/oder bei (ungefähr) 80° vor OT öffnet.

In einem weiteren Ausführungsbeispiel ist die Öffnungszeitdauer so verkürzt, dass das Auslassventil für weniger als 160° KW, 150° KW, 140° KW und/oder 130° KW; für mehr als 80° KW, 90° KW, 100° KW und/oder 110° KW; und/oder für (ungefähr) 120° KW geöffnet ist.

In einem weiteren Ausführungsbeispiel ist ein Ventilhub des Auslassventils so verkleinert, dass der Ventilhub kleiner als 50 %, 40 %, 30 % und/oder 25 % des Normalventilhubs ist; und/oderkleiner als 5 mm, 4 mm, 3 mm und/oder 2,5 mm ist; und/oder größer als 5 %, 10 %, 15 % des Normalventilhubs ist; und/oder größer als 0,5 mm, 1 mm, 1,5 mm ist; und/oder (ungefähr) 2 mm ist.

Erfindungsgemäß ist ein Schließzeitpunkt des Auslassventils (im Wesentlichen) unverändert verglichen mit einem Normalschießzeitpunkt des Auslassventils (zum Beispiel Schließzeitpunkt im Normalbetrieb, der beispielsweise am Ende des Auslasstaktes bzw. am Anfang des Einlasstaktes liegt). Alternativ oder zusätzlich liegt der Schließzeitpunkt des Auslassventils im Bereich des OT (im Auslasstakt), insbesondere zwischen OT und 40° nach OT (im Einlasstakt).

In einer bevorzugten Ausführungsform erfolgt das Betreiben der Brennkraftmaschine in einem Schwachlastbereich, insbesondere unterhalb von einer Motordrehzahl von (ungefähr) 1200 U/min und/oder innerhalb eines Motordrehzahlbereichs zwischen (ungefähr) 600 U/min und (ungefähr) 1000 U/min. Insbesondere unter derartigen Schwachlastbedingungen war es bisher schwierig, eine hohe Abgastemperatur beispielsweise zur Regeneration eines Partikelfilters zu erreichen. Das vorliegende Verfahren ermöglicht unter diesen Schwachlastbedingungen die Erzeugung einer möglichst großen Abgasenthalpie, ohne dass weitere Maßnahmen hierzu notwendig wären.

In einer weiteren Ausführungsform ist das Auslassventil während eines Arbeitszyklus des Zylinders nur einmal während der verkürzten Öffnungszeit geöffnet.

In einer Ausführungsvariante wird das Verkürzen der Öffnungszeitdauer, das Verzögern des Öffnungszeitpunkts und/oder ein Verkleinern eines Ventilhubs des Auslassventils durchgeführt, wenn, insbesondere unmittelbar (zum Beispiel durch Messung) oder mittelbar (zum Beispiel indirekt über die Erfassung von Parameterwerten, Schaltzuständen, Bedingungen oder Betriebszuständen der Brennkraftmaschine), erfasst wird, dass eine aktuelle Abgastemperatur geringer ist als eine gewünschte Abgastemperatur (z. B. 300 °C zum Regenerieren eines Partikelfilters oder 150 °C zum Betrieben eines SCR-Katalysators). Alternativ oder zusätzlich wird erfasst, dass eine aktuelle Abgastemperatur geringer ist als eine Mindestabgastemperatur zum Betreiben eines Abgasnachbehandlungssystems, insbesondere eines SCR-Katalysators, der Brennkraftmaschine und/oder eine Regeneration eines Partikelfilters, insbesondere eines Dieselpartikelfilters, gewünscht (z. B. Ablauf einer vorbestimmten Zeit oder Motorlaufleistung seit letzter Regeneration, Messung einer Partikelanzahl oder dergleichen) ist. Es ist auch möglich, dass erfasst wird, dass die Brennkraftmaschine gestartet wird, insbesondere unter Kaltstartbedingungen. Damit kann das Verfahren insbesondere dann durchgeführt werden, wenn tatsächlich eine Erhöhung der Abgastemperatur gewünscht oder erforderlich ist.

In einer weiteren Ausführungsvariante wird das Betreiben der Brennkraftmaschine mit der verkürzten Öffnungszeitdauer, verzögerten Öffnungszeit und/oder einem verkleinerten Ventilhub des Auslassventils solange durchgeführt, bis, insbesondere unmittelbar (zum Beispiel durch Messung) oder mittelbar (zum Beispiel indirekt über die Erfassung von Parameterwerten, Schaltzuständen, Bedingungen oder Betriebszuständen der Brennkraftmaschine), erfasst wird, dass eine aktuelle Abgastemperatur größer oder gleich einer gewünschten Abgastemperatur ist. Es ist beispielsweise auch möglich, dass erfasst wird, dass eine aktuelle Abgastemperatur gleich oder größer ist als eine Mindestabgastemperatur zum Betreiben eines Abgasnachbehandlungssystems, insbesondere eines SCR-Katalysators, der Brennkraftmaschine und/oder eine Regeneration eines Partikelfilters, insbesondere eines Dieselpartikelfilters, abgeschlossen ist. Damit kann das Verfahren zur Erhöhung der Abgastemperatur beendet werden, wenn die erhöhte Abgastemperatur nicht länger benötigt wird bzw. die Abgastemperatur hoch genug erhöht wurde.

Insbesondere kann das Auslassventil dann wieder mit einer Normalöffnungszeitdauer, einem Normalöffnungszeitpunkt und/oder einem Normalschließzeitpunkt betätigt werden.

In einem weiteren Ausführungsbeispiel weist die Brennkraftmaschine zwei Auslassventile je Zylinder auf und nur für ein Auslassventil der zwei Auslassventile wird eine Öffnungszeitdauer verkürzt, ein Öffnungszeitpunkt verzögert und/oder ein Ventilhub verkleinert, während das andere Auslassventil der zwei Auslassventile während eines Arbeitszyklus des Zylinders geschlossen bleibt. Dadurch kann die Dekomprimierungsarbeit aufgrund des Durchströmens nur eines zumindest teilweise geöffneten Auslassventils vergrößert werden. Dies beschleunigt die Erhöhung der Abgastemperatur.

In einer weiteren Ausführungsvariante weist die Brennkraftmaschine eine Mehrzahl von Zylindern auf und das Verfahren ist zylinderselektiv anwendbar. Dies ermöglicht, dass nur so viele Zylinder zur Erhöhung der Abgastemperatur speziell betätigt werden, wie notwendig ist. Dies kann beispielsweise ein Verschleiß an dem verwendeten variablen Ventiltrieb verringern.

Es ist möglich, dass die Zuordnung der Zylinder zu einer ersten Gruppe, die im Normalbetrieb betrieben wird, und einer zweiten Gruppe, die im Abgastemperaturerhöhungsbetrieb betrieben wird, rollierend erfolgt.

In einer weiteren Ausführungsform erfolgt die Verkürzung der Öffnungszeitdauer, die Verzögerung des Öffnungszeitpunkts und/oder eine Verkleinerung eines Ventilhubs des Auslassventils mittels eines variablen Ventiltriebs, insbesondere mittels eines Schiebenockensystems und/oder einer Lost-Motion-Vorrichtung (Leerweg-Vorrichtung).

Beispielsweise kann mittels des Schiebenockensystems von einem Normalnocken für das Auslassventil auf einen Abgastemperaturerhöhungsnocken umgeschaltet werden, wenn eine Erhöhung der Abgastemperatur gewünscht ist.

Beispielsweise kann bei Aktivierung der Lost-Motion-Vorrichtung bei einer Übertragung eines Normalnockens einer Nockenwelle auf das Auslassventil ein Ventilhub durch Einbeziehung eines Leerwegs durch die Lost-Motion-Vorrichtung so verändert werden, dass der Ventilhub des Auslassventils wie gewünscht angepasst wird (zum Beispiel Verkürzung einer Öffnungszeit, Verzögerung eines Öffnungszeitpunkts und/oder Verkleinerung eines Ventilhubs).

Die Erfindung ist auch auf ein Kraftfahrzeug, insbesondere ein Nutzfahrzeug (zum Beispiel Omnibus oder Lastkraftwagen), mit einem variablen Ventiltrieb gerichtet, der dazu ausgebildet ist, das Verfahren wie hierin offenbart auszuführen.

Insbesondere kann es sich bei dem Kraftfahrzeug um ein solches Kraftfahrzeug handeln, das im Wesentlichen (z. B. mehr als 50 % einer Betriebszeit des Kraftfahrzeugs) im Schwachlastbetrieb betrieben wird. Beispielsweise kann das Kraftfahrzeug ein Müllfahrzeug sein.

Es ist auch möglich, das Verfahren wie hierin offenbart für Personenkraftwagen, Großmotoren, geländegängige Fahrzeuge, stationäre Motoren, Marinemotoren usw. zu verwenden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Schemadarstellung eines Zylinders einer Brennkraftmaschine; und
- Figur 2: ein Steuerdiagramm einer Ventilsteuerung einer Viertakt-Brennkraftmaschine.

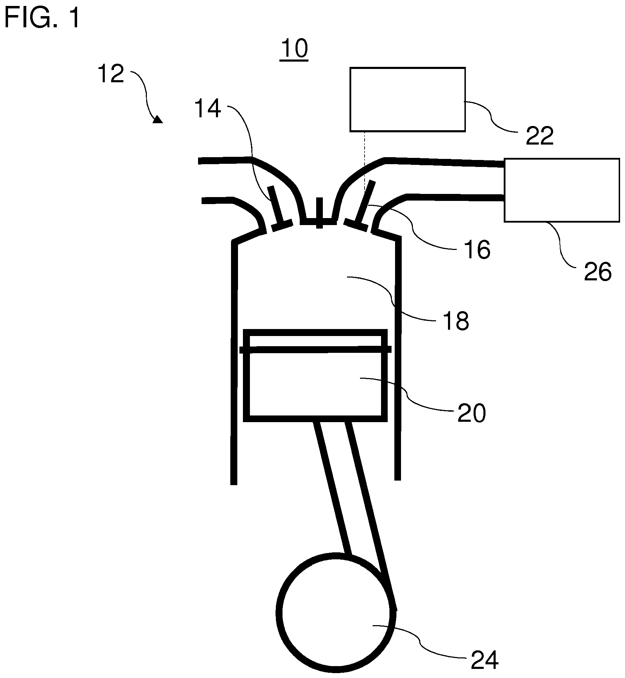

Die Figur 1 zeigt einen Zylinder 12 einer Brennkraftmaschine 10. Die Brennkraftmaschine 10 ist eine Viertakt-Brennkraftmaschine, insbesondere eine Viertakt-Diesel-Brennkraftmaschine oder eine Viertakt-Benzin-Brennkraftmaschine. Vorzugsweise ist die Brennkraftmaschine 10 in einem Nutzfahrzeug, zum Beispiel einem Lastkraftwagen oder einem Omnibus, zum Antreiben des Nutzfahrzeugs umfasst.

Der Zylinder 12 weist mindestens ein Einlassventil 14, mindestens ein Auslassventil 16, eine Verbrennungskammer 18 und einen Kolben 20 auf. Beispielsweise können zwei Einlassventile 14 und zwei Auslassventile 16 je Zylinder 12 und eine Mehrzahl von Zylindern 12 vorgesehen sein.

Das mindestens eine Einlassventil 14 verbindet die Verbrennungskammer 18 mit einem Luftzufuhrsystem der Brennkraftmaschine 10 zum Zuführen von Verbrennungsluft in die Verbrennungskammer 18. Das mindestens eine Auslassventil 16 verbindet die Verbrennungskammer 18 mit einem Abgasstrang der Brennkraftmaschine 10 zum Abführen von Abgasen.

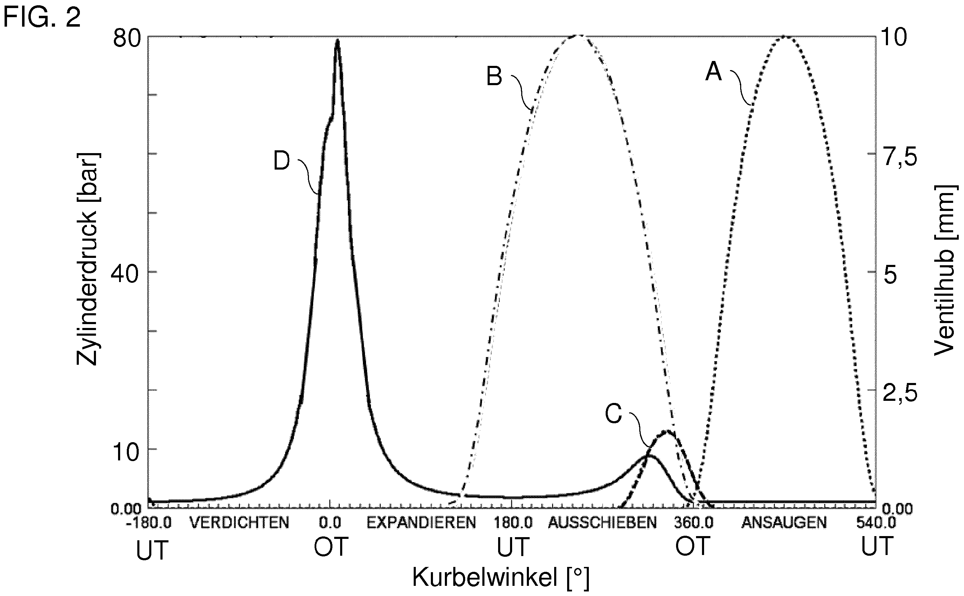

Das mindestens eine Auslassventil 16 kann über einen variablen Ventiltrieb 22 betätigt werden. Der variable Ventiltrieb 22 ermöglicht eine Verstellung der Steuerkurve des Auslassventils 16. Insbesondere ermöglicht der variable Ventiltrieb 22 eine Umschaltung der Steuerkurve eines oder mehrerer der Auslassventile 16 zwischen einem Normalbetriebsmodus und einem Abgastemperaturerhöhungsbetriebsmodus (Thermohubmodus). Das mindestens eine Auslassventil 16 wird im Normalbetrieb der Brennkraftmaschine 10 im Normalbetriebsmodus betrieben. Zur Erhöhung einer Abgastemperatur kann das Auslassventil 16 im Abgastemperaturerhöhungsbetriebsmodus betrieben werden, wie später unter Bezugnahme auf Figur 2 beispielhaft beschrieben ist.

Der variable Ventiltrieb 22 kann beispielsweise ein Schiebenockensystem aufweisen. Das Schiebenockensystem kann mindestens einen Nockenträger mit mindestens zwei Nocken aufweisen. Der Nockenträger kann drehfest und axial verschiebbar auf einer Nockenwelle angeordnet sein. Das mindestens eine Gaswechselventil wird in Abhängigkeit von einer Axialposition des Nockenträgers von verschiedenen Nocken des Nockenträgers betätigt. Insbesondere kann der Nockenträger einen ersten Nocken (z. B. gemäß Kurve B in Figur 2) für den Normalbetriebsmodus des Auslassventils 16 aufweisen und einen zweiten Nocken (z. B. gemäß Kurve C in Figur 2) für den Abgastemperaturerhöhungsbetriebsmodus des Auslassventils 16 aufweisen. Es ist auch möglich, dass bei mehreren Auslassventilen 16 je Zylinder 12 die Auslassventile 16 des jeweiligen Zylinders 12 unterschiedlich betätigbar sind.

Der variable Ventiltrieb 22 kann beispielsweise eine Lost-Motion-Vorrichtung (Leerweg-Vorrichtung) aufweisen. Bei Aktivierung der Lost-Motion-Funktion (Leerweg-Funktion) kann die Steuerkurve des Auslassventils 16 von dem Normalbetriebsmodus zu dem Abgastemperaturerhöhungsbetriebsmodus geschaltet werden. Ein Teil des Ventilhubs aus dem Normalbetriebsmodus kann in einen durch die aktivierte Lost-Motion-Vorrichtung bereitgestellten Leerweg eingehen, sodass die Steuerkurve hin zu dem Abgastemperaturerhöhungsbetriebsmodus verändert wird.

Der Kolben 20 ist auf eine bekannte Art und Weise hin- und herbewegbar in dem Zylinder 12 angeordnet und mit einer Kurbelwelle 24 verbunden.

Im Abgasstrang können eine oder mehrere Abgasnachbehandlungsvorrichtungen 26 angeordnet sein, z. B. ein Partikelfilter, insbesondere ein Dieselpartikelfilter, ein Oxidationskatalysator, insbesondere ein Dieseloxidationskatalysator, und/oder ein SCR-Katalysator (Katalysator zur selektiven katalytischen Reduktion).

In Figur 2 ist ein beispielhaftes Steuerdiagramm für die Betätigung der Einlassventile 14 und der Auslassventile 16 von Figur 1 dargestellt. Das Steuerdiagramm von Figur 2 wird nachfolgend unter Bezugnahme auf Figur 1 beschrieben.

Eine gepunktete Kurve A zeigt einen Ventilhub der Einlassventile 14 in Abhängigkeit von einem Kurbelwinkel der Kurbelwelle 24. Eine strichpunktierte Kurve B zeigt einen Ventilhub des Auslassventils 16 in Abhängigkeit von dem Kurbelwinkel der Kurbelwelle 24 in dem Normalbetriebsmodus. Eine gestrichelte Kurve C zeigt einen Ventilhub des Auslassventils 16 in Abhängigkeit von dem Kurbelwinkel der Kurbelwelle 24 in dem Abgastemperaturerhöhungsbetriebsmodus. Eine durchgezogene Kurve D zeigt einen Zylinderdruck in der Verbrennungskammer 18 in Abhängigkeit von einem Kurbelwinkel der Kurbelwelle 24 in dem Abgastemperaturerhöhungsbetriebsmodus.

Die Kurven A bis D sind über die im Viertaktbetrieb üblichen 720° Kurbelwinkel (KW) aufgetragen, wobei die linke Achse des Diagramms beispielhafte Zylinderdrücke in bar und die rechte Achse beispielhafte Ventilhübe in mm angeben.

Gemäß der Kurve A werden die Einlassventile 14 während des Abgastemperaturerhöhungsbetriebsmodus wie auch im Normalbetriebsmodus im Wesentlichen während des Ansaugtaktes geöffnet. Über den weiteren Steuerzyklus sind die Einlassventile 14 geschlossen.

Gemäß der Kurve B werden die Auslassventile 16 während des Normalbetriebsmodus im Wesentlichen während des Auslasstaktes geöffnet. Über den weiteren Steuerzyklus sind die Auslassventile 16 geschlossen.

In bestimmten Situationen kann es während des Betriebs der Brennkraftmaschine 10 gewünscht sein, die Abgastemperatur zu erhöhen. Beispielsweise kann gewünscht sein, einen Partikelfilter zu regenerieren, wozu eine Abgastemperatur zwischen 300 °C und 350 °C erforderlich sein kann. Es ist auch möglich, dass bei einem Kaltstart der Brennkraftmaschine 10 schnell eine Mindestabgastemperatur erreicht werden soll, um einen gewünschten Betrieb eines SCR-Katalysators zu gewährleisten. Insbesondere unterhalb einer Temperatur von 150 °C kann eine Umwandlung von Stickoxiden in einem SCR-Katalysator ungenügend sein. Wird das Kraftfahrzeug zusätzlich unter Schwachlast, zum Beispiel zwischen 600 U/min und 1000 U/min, betrieben, kann ein Abgastemperaturniveau allgemein vergleichsweise gering sein.

Die vorliegende Offenbarung ermöglicht die Erzeugung einer hohen Abgasenthalpie, insbesondere unter Schwachlast. Wenn unmittelbar oder mittelbar erfasst wird, dass eine Abgastemperatur zu niedrig ist, wird ein Auslassventil 16 in den Abgastemperaturerhöhungsbetriebsmodus geschaltet. Weist der Zylinder 12 mehrere Auslassventile 16 auf, zum Beispiel zwei, wird vorgeschlagen, dass lediglich eines der Auslassventile 16 in den Abgastemperaturerhöhungsbetriebsmodus geschaltet wird. Die restlichen Auslassventile 16d des jeweiligen Zylinders 12 werden hingegen nicht betätigt, sodass sie während des gesamten Steuerzyklus (0° KW bis 720° KW) bzw. Arbeitszyklus geschlossen bleiben. Damit kann eine Wirkung des Abgastemperaturerhöhungsbetriebsmodus verstärkt werden, wie nachfolgend beschrieben ist.

Gemäß der Kurve C wird das Auslassventil 16 im Abgastemperaturerhöhungsbetriebsmodus anders als im Normalbetriebsmodus (Kurve B) gesteuert. Insbesondere ist die Öffnungsdauer des Auslassventils 16 im Abgastemperaturerhöhungsbetriebsmodus (Kurve C) verkürzt gegenüber einer Öffnungsdauer des Auslassventils 16 im Normalbetriebsmodus (Kurve B). Der Öffnungszeitpunkt des Auslassventils 16 ist im Abgastemperaturerhöhungsbetriebsmodus (Kurve C) insbesondere verzögert gegenüber einem Öffnungszeitpunkt des Auslassventils 16 im Normalbetriebsmodus (Kurve B). Der (Maximal-) Ventilhub des Auslassventils 16 ist im Abgastemperaturerhöhungsbetriebsmodus (Kurve C) insbesondere verkleinert gegenüber einem (Maximal-) Ventilhub des Auslassventils 16 im Normalbetriebsmodus (Kurve B).

Das Auslassventil 16 kann bei ungefähr 280°KW, das heißt ungefähr 80° KW vor OT im Auslasstakt, geöffnet werden. Das Auslassventil 16 bleibt dann ungefähr 120° KW geöffnet und schließt im Bereich des OT bzw. nach dem OT im Ansaugtakt, zum Beispiel 40° KW nach OT im Einlasstakt. Die Steuerkurve C des Auslassventils 16 kann eine, insbesondere kleine, Ventilüberschneidung mit der Steuerkurve B der Einlassventile 14 aufweisen. Während des restlichen Steuerzyklus bleibt das Auslassventil 16 geschlossen.

Das Auslassventil 16 kann gemäß der Kurve C nur teilweise geöffnet. Die teilweise Öffnung kann einem Ventilhub von 0,5 mm bis 3 mm entsprechen (zum Beispiel 2 mm). Insbesondere kann die teilweise Öffnung kleiner als 2,5 mm sein. Im Gegensatz dazu kann ein Maximalhub (Normalhub) des Auslassventils 16 beispielsweise zwischen ungefähr 10 mm (siehe Kurve B) für kleine Brennkraftmaschinen 10 und bis zu ungefähr 16 mm für sehr große Brennkraftmaschinen 10 im Nutzfahrzeugbau sein.

Fachleute werden verstehen, dass die in dem beschriebenen Ausführungsbeispiel angegebenen konkreten Werte für den Öffnungszeitpunkt, den Schließzeitpunkt, die Öffnungsdauer und den Ventilhub insbesondere des Auslassventils 16 nicht exakt implementiert sein müssen, um die gewünschte Wirkung zu erzielen. Stattdessen sollte anerkannt werden, dass ein gewisser Toleranzbereich um die jeweiligen Werte existiert, in denen noch immer die Wirkung erzielt werden kann, wenn auch gegebenenfalls in abgeschwächter Form.

Es wird darauf hingewiesen, dass während des Abgastemperaturerhöhungsbetriebsmodus der Zylinder 12 stets befeuert ist. Das heißt, es kommt zu einer Zündung eines Kraftstoff-/Luft-Gemischs, zum Beispiel Selbstzündung oder Fremdzündung, in der Verbrennungskammer 18 und somit auch zu einer Verbrennung in der Verbrennungskammer 18. Dies ist bspw. auch ersichtlich anhand des Zylinderdruckverlaufs gemäß Kurve D im Expansionstakt bzw. Arbeitstakt.

Gemäß der Kurve D kommt es im Schwachlastbetrieb der Brennkraftmaschine 10 insbesondere zwischen 600 U/min und 1000 U/min zu einer Kompression des Abgases in der Verbrennungskammer 18 während des Ausschiebetaktes. Die Kompression ergibt sich daraus, dass das Auslassventil 16 während des Auslasstaktes zunächst geschlossen ist (siehe Kurve C). Zum Ende des Auslasstaktes öffnet das Auslassventil 16. Auch nach dem Öffnungszeitpunkt des Auslassventils bei bspw. 280° KW kommt es zunächst zu einer weiteren Erhöhung des Zylinderdrucks. Der Strömungsquerschnitt des sich öffnenden Auslassventils 16 ist zunächst zu gering, um das Abgas in dem Maße ausströmen zu lassen, dass es zu keiner Druckerhöhung aufgrund einer Kolbenbewegung des Kolbens 20 zum OT kommt. Durch den Druckanstieg kommt es ebenfalls zu einem Temperaturanstieg des Abgases. Der Druck steigt an, bis das Auslassventil 16 so weit geöffnet ist, dass der Strömungsquerschnitt ausreichend ist, um wieder zu einem Druckabfall in der Verbrennungskammer 18 zu führen. Durch die Öffnung des Auslassventils 16 kommt es zu einer Dekompression des verdichteten Abgases in den Abgastrakt. Hierbei wird Dekomprimierungsarbeit verrichtet, die ebenfalls zu einer Temperaturerhöhung des Abgases beiträgt. Dadurch, dass im Ausführungsbeispiel nur eines der beiden Auslassventile 16 gemäß der Kurve C geöffnet wird, und das andere Auslassventil 16 geschlossen bleibt, wird mehr Dekomprimierungsarbeit verrichtet. Werden hingegen beide Auslassventil 16 gemäß der Kurve C betätigt, so kann zweckmäßig der Ventilhub gemäß der Kurve C für beide Auslassventile weiter verkleinert werden, sodass eine möglichst große Dekomprimierungsarbeit beim Ausströmen verrichtet wird.

Zweckmäßig wird das Auslassprofil gemäß der Kurve C verglichen mit der Kurve B extrem verkürzt, der Auslassventilöffnungszeit so verzögert und der Ventilhub des Auslassventils 16 so eingestellt, dass eine maximale Dekompressionswirkung erzielt wird, ohne die Zylinderdrücke während des Einlassventilöffnungszeitpunkt (siehe Kurve A) der Einlassventile 14 zu groß werden zu lassen. Ein zu großer Druck zum Einlassventilöffnungszeitpunkt würde zu einer sehr großen Belastung der Einlassventile 16 und deren Ventiltriebe führen, da die Einlassventile gegen den Druck in der Verbrennungskammer 18 geöffnet werden. Zusätzlich könnte (zu viel) Abgas in den Einlasstakt durch die geöffneten Einlassventile strömen.

Wenn die Abgastemperatur lange genug erhöht gewesen ist, um beispielsweise einen Partikelfilter zu regenerieren oder eine Mindestabgastemperatur zu erreichen, kann die Steuerkurve der Auslassventile 16 wieder zurück zu dem Normalbetriebsmodus geschaltet werden. Die Erfindung ist nicht auf die vorstehend beschriebenen bevorzugten Ausführungsbeispiele beschränkt, sondern durch die Ansprüche definiert.

### Bezugszeichenliste

- 10: Brennkraftmaschine
- 12: Zylinder
- 14: Einlassventil
- 16: Auslassventil
- 18: Verbrennungskammer
- 20: Kolben
- 22: Variabler Ventiltrieb
- 24: Kurbelwelle
- 26: Abgasnachbehandlungsvorrichtung

- A: Steuerkurve für Einlassventil
- B: Steuerkurve für Auslassventil im Normalbetriebsmodus
- C: Steuerkurve für Auslassventil im Abgastemperaturerhöhungsbetriebsmodus
- D: Zylinderdruck im Abgastemperaturerhöhungsbetriebsmodus

## Patentansprüche

1. Verfahren zum Betreiben einer Brennkraftmaschine (10) zum Erhöhen einer Abgastemperatur, aufweisend:
Verkürzen einer Öffnungszeitdauer eines Auslassventils (16) eines Zylinders (12) der Brennkraftmaschine (10) im Auslasstakt verglichen mit einer Normalöffnungszeitdauer des Auslassventils (16);
Verzögern eines Öffnungszeitpunkts des Auslassventils (16) im Auslasstakt verglichen mit einem Normalöffnungszeitpunkt des Auslassventils (16);
optionales Verkleinern eines Ventilhubs des Auslassventils (16) im Auslasstakt verglichen mit einem Normalventilhub des Auslassventils (16); und
Betreiben der Brennkraftmaschine (10) durch Befeuern des Zylinders (12) und Betätigen des Auslassventils (16) gemäß der verkürzten Öffnungszeitdauer und dem verzögerten Öffnungszeitpunkt und optional auch gemäß dem verkleinerten Ventilhub,
wobei ein Schließzeitpunkt des Auslassventils (16) unverändert ist verglichen mit einem Normalschießzeitpunkt des Auslassventils (16) und/oder im Bereich des OT, insbesondere zwischen OT und 40° nach OT, liegt,
**dadurch gekennzeichnet, dass** die Öffnungszeitdauer des Auslassventils (16) so verkürzt ist und/oder der Öffnungszeitpunkt des Auslassventils (16) so verzögert ist und optional der Ventilhub des Auslassventils (16) so verkleinert ist, dass:
Abgas im Zylinder (12) im Auslasstakt, insbesondere anfänglich, verdichtet wird,
verdichtetes Abgas bei Öffnung des Auslassventils (16) dekomprimiert wird, und
die Verdichtung und/oder die Dekomprimierungsarbeit maximiert wird unter der Randbedingung, dass ein Zylinderdruck zum Öffnungszeitpunkt eines Einlassventils (14) des Zylinders (12) unterhalb eines Grenzzylinderdrucks ist, der in einem Bereich zwischen 15 bar und 25 bar liegt.

2. Verfahren nach Anspruch 1, wobei der Öffnungszeitpunkt so verzögert ist, dass das Auslassventil (16) im Auslasstakt öffnet:
nach einer ersten Hälfte des Auslasstakts; und/oder
im Bereich zwischen 120° KW vor OT und 40° KW vor OT; und/oder
im Bereich zwischen 100° KW vor OT und 60° vor OT; und/oder
im Bereich zwischen 90° KW vor OT und 70° vor OT; und/oder
bei 80° vor OT.

3. Verfahren nach einem der vorherigen Ansprüche, wobei die Öffnungszeitdauer so verkürzt ist, dass das Auslassventil (16) geöffnet ist:
für weniger als 160° KW, 150° KW, 140° KW und/oder 130° KW; und/oder
für mehr als 80° KW, 90° KW, 100° KW und/oder 110° KW; und/oder
für 120° KW.

4. Verfahren nach einem der vorherigen Ansprüche, wobei ein Ventilhub des Auslassventils (16) so verkleinert ist, dass der Ventilhub:
kleiner als 50 %, 40 %, 30 % und/oder 25 % des Normalventilhubs ist; und/oder
kleiner als 5 mm, 4 mm, 3 mm und/oder 2,5 mm ist; und/oder
größer als 5 %, 10 %, 15 % des Normalventilhubs ist; und/oder
größer als 0,5 mm, 1 mm, 1,5 mm ist; und/oder
2 mm ist.

5. Verfahren nach einem der vorherigen Ansprüche, wobei:
das Betreiben der Brennkraftmaschine (10) in einem Schwachlastbereich erfolgt, insbesondere unterhalb von einer Motordrehzahl von 1200 U/min und/oder innerhalb eines Motordrehzahlbereichs zwischen 600 U/min und 1000 U/min.

6. Verfahren nach einem der vorherigen Ansprüche, wobei:
das Auslassventil (16) während eines Arbeitszyklus des Zylinders (12) nur einmal während der verkürzten Öffnungszeit geöffnet ist.

7. Verfahren nach einem der vorherigen Ansprüche, wobei das Verkürzen der Öffnungszeitdauer, das Verzögern des Öffnungszeitpunkts und/oder ein Verkleinern eines Ventilhubs des Auslassventils (16) durchgeführt wird, wenn, insbesondere unmittelbar oder mittelbar, erfasst wird, dass:
eine aktuelle Abgastemperatur geringer ist als eine gewünschte Abgastemperatur; und/oder
eine aktuelle Abgastemperatur geringer ist als eine Mindestabgastemperatur zum Betreiben eines Abgasnachbehandlungssystems (26), insbesondere eines SCR-Katalysators, der Brennkraftmaschine (10); und/oder
eine Regeneration eines Partikelfilters (26), insbesondere eines Dieselpartikelfilters, gewünscht ist; und/oder
die Brennkraftmaschine (10) gestartet wird, insbesondere unter Kaltstartbedingungen.

8. Verfahren nach einem der vorherigen Ansprüche, wobei das Betreiben der Brennkraftmaschine (10) mit der verkürzten Öffnungszeitdauer, verzögerten Öffnungszeit und/oder einem verkleinerten Ventilhub des Auslassventils (16) solange durchgeführt wird, bis, insbesondere unmittelbar oder mittelbar, erfasst wird, dass:
eine aktuelle Abgastemperatur größer oder gleich einer gewünschten Abgastemperatur ist;
eine aktuelle Abgastemperatur gleich oder größer ist als eine Mindestabgastemperatur zum Betreiben eines Abgasnachbehandlungssystems (26), insbesondere eines SCR-Katalysators, der Brennkraftmaschine (10); und/oder
eine Regeneration eines Partikelfilters (26), insbesondere eines Dieselpartikelfilters, abgeschlossen ist.

9. Verfahren nach einem der vorherigen Ansprüche, wobei:
die Brennkraftmaschine (10) zwei Auslassventile (16) je Zylinder (12) aufweist und nur für ein Auslassventil (16) der zwei Auslassventile (16) eine Öffnungszeitdauer verkürzt, ein Öffnungszeitpunkt verzögert und/oder ein Ventilhub verkleinert wird, während das andere Auslassventil (16) der zwei Auslassventile (16) während eines Arbeitszyklus des Zylinders (12) geschlossen bleibt;
die Brennkraftmaschine (10) eine Mehrzahl von Zylindern (12) aufweist und das Verfahren zylinderselektiv anwendbar ist.

10. Verfahren nach einem der vorherigen Ansprüche, wobei
die Verkürzung der Öffnungszeitdauer, die Verzögerung des Öffnungszeitpunkts und/oder eine Verkleinerung eines Ventilhubs des Auslassventils (16) mittels eines variablen Ventiltriebs (22), insbesondere mittels eines Schiebenockensystems und/oder einer Lost-Motion-Vorrichtung, erfolgt.

11. Kraftfahrzeug, insbesondere Nutzfahrzeug, mit einem variablen Ventiltrieb (22), der dazu ausgebildet ist, das Verfahren nach einem der vorherigen Ansprüche auszuführen.

## Claims

1. A method for operating an internal combustion engine (10) so as to increase an exhaust-gas temperature, comprising:
shortening an opening duration of an outlet valve (16) of a cylinder (12) of the internal combustion engine (10) in the exhaust stroke in relation to a normal opening duration of the outlet valve (16);
delaying an opening time of the outlet valve (16) in the exhaust stroke in relation to a normal opening time of the outlet valve (16);
optionally reducing a valve lift of the outlet valve (16) in the exhaust stroke in relation to a normal valve lift of the outlet valve (16); and
operating the internal combustion engine (10) by firing of the cylinder (12) and actuation of the outlet valve (16) in accordance with the shortened opening duration and the delayed opening time and optionally also in accordance with the reduced valve lift,
wherein a closing time of the outlet valve (16) is unchanged in relation to a normal closing time of the outlet valve (16) and/or lies in the region of TDC, in particular between TDC and 40° after TDC,
**characterized in that** the opening duration of the outlet valve (16) is shortened, and/or the opening time of the outlet valve (16) is delayed, and optionally the valve lift of the outlet valve (16) is reduced, such that:
exhaust gas is, in particular initially, compressed in the cylinder (12) in the exhaust stroke,
compressed exhaust gas is decompressed upon opening of the outlet valve (16), and
the compression and/or the decompression work is maximized under the boundary condition that a cylinder pressure at the opening time of an inlet valve (14) of the cylinder (12) lies below a threshold cylinder pressure that lies in a range between 15 bar and 25 bar.

2. The method according to Claim 1, wherein the opening time is delayed such that the outlet valve (16) opens in the outlet stroke:
after a first half of the outlet stroke; and/or
in the range between 120° CA before TDC and 40° CA before TDC; and/or
in the range between 100° CA before TDC and 60° before TDC; and/or
in the range between 90° CA before TDC and 70° before TDC; and/or
at 80° before TDC.

3. The method according to either one of the preceding claims, wherein the opening duration is shortened such that the outlet valve (16) is opened:
for less than 160° CA, 150° CA, 140° CA and/or 130° CA; and/or
for more than 80° CA, 90° CA, 100° CA and/or 110° CA; and/or
for 120° CA.

4. The method according to any one of the preceding claims, wherein a valve lift of the outlet valve (16) is reduced such that the valve lift:
is less than 50%, 40%, 30% and/or 25% of the normal valve lift; and/or
is less than 5 mm, 4 mm, 3 mm and/or 2.5 mm; and/or
is greater than 5%, 10%, 15% of the normal valve lift; and/or
is greater than 0.5 mm, 1 mm, 1.5 mm; and/or
is 2 mm.

5. The method according to any one of the preceding claims, wherein:
the operation of the internal combustion engine (10) is performed in a low-load range, in particular below an engine rotational speed of 1200 rpm and/or within an engine rotational speed range between 600 rpm and 1000 rpm.

6. The method according to any one of the preceding claims, wherein:
the outlet valve (16) is, during a working cycle of the cylinder (12), opened only once during the shortened opening time.

7. The method according to any one of the preceding claims, wherein the shortening of the opening duration, the delaying of the opening time and/or a reduction of a valve lift of the outlet valve (16) is performed if it is detected, in particular directly or indirectly, that:
a present exhaust-gas temperature is lower than a desired exhaust-gas temperature; and/or
a present exhaust-gas temperature is lower than a minimum exhaust-gas temperature for the operation of an exhaust-gas aftertreatment system (26), in particular of an SCR catalytic converter, of the internal combustion engine (10); and/or
a regeneration of a particle filter (26), in particular of a diesel particle filter, is desired; and/or
the internal combustion engine (10) is being started, in particular under cold-start conditions.

8. The method according to any one of the preceding claims, wherein the operation of the internal combustion engine (10) with the shortened opening duration, delayed opening time and/or a reduced valve lift of the outlet valve (16) is performed until such time as it is detected, in particular directly or indirectly, that:
a present exhaust-gas temperature is higher than or equal to a desired exhaust-gas temperature;
a present exhaust-gas temperature is equal to or higher than a minimum exhaust-gas temperature for the operation of an exhaust-gas aftertreatment system (26), in particular of an SCR catalytic converter, of the internal combustion engine (10); and/or
a regeneration of a particle filter (26), in particular of a diesel particle filter, has been completed.

9. The method according to any one of the preceding claims, wherein:
the internal combustion engine (10) has two outlet valves (16) per cylinder (12), and an opening duration is shortened, an opening time is delayed and/or a valve lift is reduced only for one outlet valve (16) of the two outlet valves (16), whereas the other outlet valve (16) of the two outlet valves (16) remains closed during a working cycle of the cylinder (12);
the internal combustion engine (10) has a multiplicity of cylinders (12), and the method is applicable on a cylinder-selective basis.

10. The method according to any one of the preceding claims, wherein
the shortening of the opening duration, the delaying of the opening time and/or a reduction of a valve lift of the outlet valve (16) is performed by means of a variable valve drive (22), in particular by means of a sliding cam system and/or a lost-motion apparatus.

11. A motor vehicle, in particular utility vehicle, having a variable valve drive (22) which is designed to carry out the method according to any one of the preceding claims.

## Revendications

1. Procédé de fonctionnement d'un moteur à combustion interne (10) pour augmenter une température de gaz d'échappement, ledit procédé comprenant les étapes suivantes :
réduire une durée d'ouverture d'une soupape d'échappement (16) d'un cylindre (12) du moteur à combustion interne (10) dans la phase d'échappement par rapport à une durée d'ouverture normale de la soupape d'échappement (16) ;
retarder un instant d'ouverture de la soupape d'échappement (16) dans la phase d'échappement par rapport à un instant d'ouverture normal de la soupape d'échappement (16) ;
éventuellement réduire une levée de soupape de la soupape d'échappement (16) dans la phase d'échappement par rapport à une levée de soupape normale de la soupape d'échappement (16) ; et
faire fonctionner le moteur à combustion interne (10) par allumage du cylindre (12) et actionnement de la soupape d'échappement (16) en fonction de la durée d'ouverture réduite et de l'instant d'ouverture retardé et éventuellement aussi en fonction de la levée de soupape réduite,
un instant de fermeture de la soupape d'échappement (16) étant inchangé par rapport à un instant de fermeture normal de la soupape d'échappement (16) et/ou se situant dans la zone du PMH, notamment compris entre le PMH et 40° après le PMH,
**caractérisé en ce que** la durée d'ouverture de la soupape d'échappement (16) est réduite et/ou l'instant d'ouverture de la soupape d'échappement (16) est retardé et, éventuellement, la levée de soupape de la soupape d'échappement (16) est réduite de sorte que :
les gaz d'échappement sont comprimés dans le cylindre (12) pendant la phase d'échappement, notamment au début,
les gaz d'échappement comprimés sont décompressés de l'ouverture de la soupape d'échappement (16), et
le travail de compression et/ou de décompression est maximisé sous la condition aux limites selon laquelle une pression de cylindre à l'instant d'ouverture d'une soupape d'admission (14) du cylindre (12) est inférieure à une pression de cylindre limite qui est située dans une gamme comprise entre 15 bars et 25 bars.

2. Procédé selon la revendication 1, l'instant d'ouverture étant retardé de sorte que la soupape d'échappement (16) s'ouvre dans la phase d'échappement :
après une première moitié de la phase d'échappement ; et/ou
dans la gamme comprise entre 120° d'angle de vilebrequin avant PMH et 40° d'angle de vilebrequin avant PMH ; et/ou
dans la gamme comprise entre 100° d'angle de vilebrequin avant PMH et 60° avant PMH ; et/ou dans la gamme comprise entre 90° d'angle de vilebrequin avant PMH et 70° avant PMH ; et/ou à 80° avant PMH.

3. Procédé selon l'une des revendications précédentes, l'instant d'ouverture étant raccourci de sorte que la soupape d'échappement (16) soit ouverte :
pour moins de 160° d'angle de vilebrequin, 150° d'angle de vilebrequin, 140° d'angle de vilebrequin et/ou 130° d'angle de vilebrequin ; et/ou
pour plus de 80° d'angle de vilebrequin, 90° d'angle de vilebrequin, 100° d'angle de vilebrequin et/ou 110° d'angle de vilebrequin ; et/ou
pour 120° d'angle de vilebrequin.

4. Procédé selon l'une des revendications précédentes, une levée de soupape de la soupape d'échappement (16) étant réduite de sorte que la phase de la soupape soit :
inférieure à 50 %, 40 %, 30 % et/ou 25 % de la levée de soupape normale ; et/ou
inférieure à 5 mm, 4 mm, 3 mm et/ou 2,5 mm ; et/ou supérieure à 5 %, 10 %, 15 % de la levée de soupape normale ; et/ou
supérieure à 0,5 mm, 1 mm, 1,5 mm ; et/ou de 2 mm.

5. Procédé selon l'une des revendications précédentes :
le fonctionnement du moteur à combustion interne (10) s'effectuant dans une zone de faible charge, en particulier au-dessous d'une vitesse de rotation de moteur de 1200 tr/min et/ou dans une gamme de vitesses de rotation de moteur comprise entre 600 tr/min et 1000 tr/min.

6. Procédé selon l'une des revendications précédentes :
pendant un cycle de travail du cylindre (12) la soupape d'échappement (16) n'étant ouverte qu'une seule fois pendant la durée d'ouverture réduite.

7. Procédé selon l'une des revendications précédentes, la réduction de la durée d'ouverture, le retardement de l'instant d'ouverture et/ou une réduction d'une levée de soupape de la soupape d'échappement (16) étant effectués s'il est détecté, notamment directement ou indirectement, que :
une température de gaz d'échappement actuelle est inférieure à une température de gaz d'échappement souhaitée ; et/ou
une température de gaz d'échappement actuelle est inférieure à une température de gaz d'échappement minimale pour faire fonctionner un système de post-traitement de gaz d'échappement (26), en particulier un convertisseur catalytique SCR, du moteur à combustion interne (10) ; et/ou
une régénération d'un filtre à particules (26), notamment un filtre à particules diesel, est souhaitée ; et/ou
le moteur à combustion interne (10) est démarré, en particulier dans des conditions de démarrage à froid.

8. Procédé selon l'une des revendications précédentes, le fonctionnement du moteur à combustion interne (10) s'effectuant avec la durée d'ouverture réduite, l'instant d'ouverture retardé et/ou une levée de soupape réduite de la soupape d'échappement (16) jusqu'à ce qu'il soit détecté, en particulier directement ou indirectement, que :
une température de gaz d'échappement actuelle est supérieure ou égale à une température de gaz d'échappement souhaitée ;
une température de gaz d'échappement actuelle est égale ou supérieure à une température de gaz d'échappement minimale pour faire fonctionner un système de post-traitement de gaz d'échappement (26), en particulier un convertisseur catalytique SCR, du moteur à combustion interne (10) ; et/ou
une régénération d'un filtre à particules (26), en particulier d'un filtre à particules diesel, est terminée.

9. Procédé selon l'une des revendications précédentes :
le moteur à combustion interne (10) comportant deux soupapes d'échappement (16) par cylindre (12) et, pour une seule soupape d'échappement (16) des deux soupapes d'échappement (16), une durée d'ouverture étant réduite, un instant d'ouverture étant retardé et/ou une levée de soupape étant réduite, tandis que l'autre soupape d'échappement (16) des deux soupapes d'échappement (16) reste fermée pendant un cycle de travail du cylindre (12) ;
le moteur à combustion interne (10) comportant une pluralité de cylindres (12) et le procédé pouvant être appliqué de manière sélective aux cylindres.

10. Procédé selon l'une des revendications précédentes,
la réduction de la durée d'ouverture, le retard de l'instant d'ouverture et/ou une réduction d'une levée de soupape de la soupape d'échappement (16) étant effectués au moyen d'un entraînement de soupape variable (22), en particulier au moyen d'un système de cames coulissantes et/ou un dispositif à mouvement perdu.

11. Véhicule automobile, notamment utilitaire, comprenant un entraînement de soupape variable (22) conçu pour mettre en œuvre le procédé selon l'une des revendications précédentes.
